# EUROPÄISCHE PATENTANMELDUNG

(11) **EP 1 219 349 A2**
(43) Veröffentlichungstag der Anmeldung: **03.07.2002**
(21) Anmeldenummer: 01130668.5
(22) Anmeldetag: 21.12.2001
(51) Int. Cl.: B01J 20/26, B01D 37/02, C12H 1/04, B01D 39/04

(54) **Verwendung teilchenförmiger Polymerisate als Filterhilfsmittel für wässrige Flüssigkeiten**

(30) Priorität: 27.12.2000 DE 10065427
(71) Anmelder: BASF AKTIENGESELLSCHAFT, 67056 Ludwigshafen (DE)
(72) Erfinder: Witteler, Helmut, 67157 Wachenheim (DE); Drohmann, Christian, 67105 Schifferstadt (DE); Sanner, Axel, 67227 Frankenthal (DE); Schweikert, Loni, 67122 Altrip (DE); Kolter, Karl, 67117 Limburgerhof (DE)
(74) Vertreter: Kinzebach, Werner, Dr.

(57) **Zusammenfassung**

Die Erfindung betrifft die Verwendung teilchenförmiger, in Wasser unlöslicher Polymerzubereitungen, umfassend wenigstens ein Polymerisat P, das im Wesentlichen aus hydrophilen Polymersegmenten und hydrophoben Polymersegmenten aufgebaut ist, als Filterhilfsmittel für die Filtration wässriger Flüssigkeiten.

## Beschreibung

Die vorliegende Erfindung betrifft die Verwendung von teilchenförmigen, in Wasser unlöslichen Polymerzubereitungen als Filterhilfsmittel für die Filtration wässriger Flüssigkeiten, sowie ein Verfahren zur Filtration wässriger Flüssigkeiten unter Verwendung dieser Filterhilfsmittel.

Die Trennung von fest-flüssigen Stoffgemischen durch Filtration ist ein wichtiger Verfahrensschritt in vielen industriellen Produktionsprozessen. Insbesondere bei der Filtration wässriger Flüssigkeiten bedient man sich häufig sogenannter Filterhilfsmittel. Bei den Filterhilfsmitteln handelt es sich um teilchenförmige, beispielsweise granulierte, pulverförmige oder faserförmige Substanzen, die je nach Art und Menge des in der zu filtrierenden Flüssigkeit enthaltenen Feststoffs den Aufbau eines Filterkuchens ermöglichen oder diesen auflockern sollen.

Die Wirkung der Filterhilfsmittel beruht auf der Ausbildung von Kapillaren in dem Filterkuchen, die einerseits klein genug sind, um Feststoffe zurückzuhalten, andererseits zahlreich genug sind, um den Ablauf der flüssigen Phase zu erleichtern. Zu diesem Zweck kann man das Filterhilfsmittel der zu filtrierenden Suspension (Trübe) zugeben und/oder vor der Filtration als Hilfsschicht auf der Filterfläche (Filtergebe) aufbringen. Bei der sogenannten Anschwemmfiltration wird beispielsweise vor dem Filtrationsbeginn auf einer Stützfläche (Filtergebe) eine Filterhilfsmittel-Vorschicht angeschwemmt. Das Filterhilfsmittel wird dann der Trübe, vorzugsweise kontinuierlich, zudosiert. Bei der Filtration bildet sich so ein lockerer Filterkuchen aus Filterhilfsmittel aus, welcher die Feststoffe der Trübe zurückhält, so dass das flüssige Dispergiermedium als klares Filtrat ablaufen kann (zu den Begriffen Filterhilfsmittel und Filtration siehe auch "Roempp Chemielexikon", 9. Auflage, Georg Thiemer Verlag Stuttgart, S. 1357 ff.).

Es versteht sich von selber, dass die Filterhilfsmittel chemisch inert und in der zu filtrierenden Trübe unlöslich sein sollten. Zudem sollten sie sich unter Druckeinfluss nicht verformen, damit die Poren im Filterkuchen nicht kollabieren. Außerdem ist es wünschenswert, wenn die Filterhilfsmittel regenerierbar sind.

Die gebräuchlichsten Filterhilfsmittel umfassen neben organischen Substanzen wie Cellulose, Holzkohle und Holzpulver, anorganische Materialien, insbesondere silikatischer Natur, wie Kieselgur, Perlite, Diatomeen und Bentonite. Diese Materialien haben jedoch den Nachteil, dass sie nicht regenerierbar sind und daher entsorgt werden müssen.

Insbesondere in der Getränkeindustrie besteht ein hoher Bedarf an Filterhilfsmitteln für wässrige Flüssigkeiten, da Fruchtsaft- und Gärungsgetränke wie Bier häufig einer Filtration unterworfen werden. Als Filterhilfsmittel wird in der Getränkeindustrie häufig Kieselgur verwendet. Bei der Herstellung von Bier werden beispielsweise 150 bis 200 g Filterhilfsmittel, insbesondere Kieselgur, je hl Bier benötigt. Da die Filterwirkung dieser Filterhilfsmittel nach einer gewissen Zeit nachlässt, müssen sie entfernt werden, und, im Falle der nicht-regenerierbaren Filterhilfsmittel, deponiert werden, was naturgemäß mit einem hohen Kostenaufwand verbunden ist. Zudem wird eine krebserregende Wirkung der in der Getränkeindustrie verwendeten Kieselgur derzeit diskutiert.

Es hat daher nicht an Versuchen gefehlt, synthetische Filterhilfsmittel bereitzustellen. In der US 4,344,846 wird beispielsweise die Verwendung von expandierten Polystyrol in der Anschwemmfiltration beschrieben.

Die WO 96/35497 und die EP 48309 beschreiben Filterhilfsmittel für die Anschwemmfiltration auf Basis kugelförmiger, inkompressibler Polymere, beispielsweise Polyvinylpyrrolidon oder Polyamid-11, die einen Filterkuchen mit einer Porosität im Bereich von 0,3 bis 0,5 bilden.

Die EP-A 879629 beschreibt Filterhilfsmittel, die aus einem teilchenförmigen oder faserigen Träger und einem darauf angebrachten hydrophoben Überzug bestehen.

Aus der EP-A 177812 und der EP-A 351363 sind hochvernetzte, wenig quellbare, pulverförmige Polymerisate auf Basis von N-Vinylpyrrolidon bekannt, die als Filterhilfsmittel verwendet werden können.

Die DE-A 19920944 beschreibt unlösliche, nur wenig quellbare Popcorn-Polymerisate auf Basis von Styrol und N-Vinyllactamen. Die Verwendung dieser Popcorn-Polymerisate als Filterhilfsmittel wird vorgeschlagen.

Die synthetischen Filterhilfsmittel auf Basis von Polymeren weisen eine verbesserte Regenerierbarkeit auf. Ihre Filtrierwirkung lässt jedoch teilweise zu wünschen übrig. Ein Teil der synthetischen Filtrierhilfsmittel ist wiederum weniger für die Anschwemmfiltration wässriger Flüssigkeiten geeignet, da sie in Wasser nicht oder nur schlecht sedimentieren.

Der vorliegenden Erfindung lag die Aufgabe zu Grunde, Filterhilfsmittel für die Filtration wässriger Flüssigkeiten bereit zu stellen, die eine gute Filtrationswirkung aufweisen und für die Anschwemmfiltration geeignet sind. Außerdem ist eine gute Regenerierbarkeit der Filterhilfsmittel gewünscht.

Diese Aufgabe wird überraschenderweise gelöst durch teilchenförmige Polymerzubereitungen, die ein Polymerisat P enthalten, das aus hydrophilen und hydrophoben Polymersegmenten aufgebaut sind.

Demnach betrifft die vorliegende Erfindung die Verwendung teilchenförmiger, in Wasser unlöslicher Polymerzubereitungen, umfassend wenigstens ein Polymerisat P, das im Wesentlichen aus hydrophilen Polymersegmenten und hydrophoben Polymersegmenten aufgebaut ist, als Filterhilfsmittel für die Filtration wässriger Flüssigkeiten, insbesondere für die Anschwemmfiltration. Die Erfindung betrifft auch ein Verfahren zur Filtration wässriger Flüssigkeiten unter Verwendung derartiger Polymerzubereitungen, insbesondere ein Verfahren, das nach der Methode der Anschwemmfiltration durchgeführt wird.

In den erfindungsgemäß zur Anwendung kommenden Polymerisaten P bestehen die Polymerisatteilchen im Wesentlichen aus hydrophilen Polymersegmenten und hydrophoben Polymersegmenten. Unter Polymersegmenten versteht der Fachmann Polymerketten bzw. Polymer-Teilstrukturen, die aus mehreren, in der Regel wenigstens 10, vorzugsweise wenigstens 20, erfindungsgemäß bevorzugt wenigstens 30, gleichartigen Wiederholungseinheiten aufgebaut sind. Hydrophobe Polymersegmente sind dementsprechend Polymerteilstrukturen bzw. Polymerketten, die aus mehreren, miteinander verknüpften, hydrophoben Monomerbausteinen aufgebaut sind. Dementsprechend versteht man unter hydrophilen Polymersegmenten Polymerketten bzw. Polymerteilstrukturen, die aus mehreren hydrophilen Monomerbausteinen als Wiederholungseinheiten aufgebaut sind. Die hydrophilen und hydrophoben Polymersegmente können im Sinne eines Block- oder Pfropfpolymerisats durch chemische Bindungen miteinander verbunden sein. Sie können in dem erfindungsgemäß zur Anwendung kommenden Polymerisat P auch als innige, physikalische Mischung vorliegen. Wichtig ist lediglich, dass die einzelnen Polymerteilchen des Polymerisats P sowohl aus hydrophilen als auch aus hydrophoben Polymersegmenten aufgebaut sind.

Für die erfindungsgemäße Wasserunlöslichkeit ist es von Vorteil, wenn der Gewichtsanteil der hydrophilen Polymersegmente den der hydrophoben Polymersegmente nicht überschreitet. In der Regel wird daher das Gewichtsverhältnis von hydrophilen Polymersegmenten zu hydrophoben Polymersegmenten im Polymerisat P im Bereich von 1:1 bis 1:100, bevorzugt im Bereich von 1:2 bis 1:50, und besonders bevorzugt im Bereich von 1:3 bis 1:20 liegen.

Weiterhin hat es sich als günstig erwiesen, wenn die hydrophilen Polymersegmente nichtionischer Natur sind, d. h. weniger als 0,1 mol/kg ionische oder ionogene Gruppen wie Carboxylat, Sulfonat oder Aminogruppen aufweisen. Besonders bevorzugt weisen die hydrophilen Polymersegmente keine ionischen oder ionogenen Gruppen auf.

Beispiele für nichtionische hydrophile Polymersegmente sind solche, die aus ethylenisch ungesättigten Monomeren mit einer Wasserlöslichkeit oberhalb 50 g/l (bei 25 °C, 1 bar) aufgebaut sind, weiterhin Polyvinylalkohol-Strukturen, sowie Polyetherketten. Beispiele für Monomere mit einer Wasserlöslichkeit oberhalb 50 g/l sind Methylacrylat, Acrylamid, Methacrylamid, Hydroxyalkylacrylate und -methacrylate wie Hydroxyethylacrylat, Hydroxypropylacrylat, Hydroxyethylmethacrylat, Hydroxypropylmethacrylat, N-Vinylpyrrolidon, N-Vinylcaprolactam, Methylvinylether und vergleichbare Monomere.

Bevorzugte hydrophile Polymersegmente weisen eine Polyetherstruktur, insbesondere eine Poly-C₂-C₄-alkylenetherstruktur auf. Besonders bevorzugt sind die hydrophilen Polymersegmente von Polyethylenoxiden, Polypropylenoxiden und/oder Polyethylen/Polypropylenoxid-Blockcopolymeren, z. B. Blockcopolymeren mit einem zentralen Polypropylenoxid-Segment und endständigen Polyethylenoxid-Segmenten, abgeleitet.

Weiterhin hat es sich als vorteilhaft erwiesen, wenn die hydrophilen Polymersegmente für sich gesehen nur begrenzt wasserlöslich sind. Dies erreicht man beispielsweise durch hohe Molekulargewichte, z. B. oberhalb von 10000, vorzugsweise 50000 Dalton und insbesondere 100000 Dalton oder durch Einsatz von blockartig aufgebauten hydrophilen Segmenten, die oligomere Blöcke mit begrenzter Wasserlöslichkeit aufweisen, z. B. Polyethylenoxid/Polypropylenoxid-Segmente, wobei der Polypropylenblock eine Verringerung der Wasserlöslichkeit des hydrophilen Segments bewirkt. Hier reichen Molekulargewichte im Bereich von 1000 bis 20000 Dalton aus.

Selbstverständlich können beide Maßnahmen miteinander kombiniert werden.

In einer bevorzugten Ausführungsform der Erfindung verwendet man teilchenförmige Polymerisate, deren hydrophile Segmente unter Polyethylenoxid-Polypropylenoxid-Blockcopolymeren (EO/PO-Blockcopolymer) ausgewählt sind, und insbesondere unter Triblockcopolymeren mit zentralem Polypropylenoxid-Block. Der Anteil des Polypropylenoxid-Blocks macht dabei vorzugsweise 10 bis 90 und insbesondere 30 bis 80 Gew.-% des EO/PO-Blockcopolymeren aus.

Bevorzugt sind solche teilchenförmige Polymerisate, in denen die hydrophilen Polymersegmente unter den vorstehend genannten Polyalkylenoxiden, insbesondere unter Polyethylenoxid/Polypropylenoxid-Blockcopolymeren ausgewählt sind, und die hydrophoben Polymersegmente im Wesentlichen von vinylaromatischen Monomeren A gebildet werden.

Die hydrophoben Polymersegmente sind in der Regel aus ethylenisch ungesättigten, hydrophoben Monomeren A aufgebaut. Die hydrophobe Natur der Monomere A kommt in ihrer geringen Wasserlöslichkeit zum Ausdruck, die in der Regel 10 g/l, und insbesondere 1 g/l bei 25°C nicht überschreitet. Beispiele für hydrophobe Monomere A sind vinylaromatische Monomere, Ester ethylenisch ungesättigter Carbonsäuren wie der Acrylsäure oder der Methacrylsäure mit Alkoholen, die wenigstens 2, vorzugsweise wenigstens 4 C-Atome, z. B. 2 bis 10 C-Atome, aufweisen. Weitere Beispiele für hydrophobe Monomere A sind Olefine wie Ethen und Propen und Diolefine wie Butadien. Bevorzugte Monomere A sind die vinylaromatischen Monomere, insbesondere Styrol, α-Methylstyrol sowie Styrolderivate mit Alkylgruppen am Benzol-Ring, wie Vinyltoluole und 4-tert.-Butylstyrol. Besonders bevorzugtes vinylaromatisches Monomer A ist Styrol. In der Regel werden die hydrophoben Polymersegmente weniger als 20 Gew.-%, vorzugsweise weniger als 10 Gew.-%, und insbesondere keine von den Monomeren A verschiedenen Comonomere B einpolymerisiert enthalten. Vorzugsweise sind wenigstens 80, insbesondere wenigstens 90, und insbesondere alle Monomere A unter vinylaromatischen Monomeren ausgewählt. Als etwaige Comonomere B kommen die vorgenannten hydrophilen Monomere, sowie sonstige übliche, mit Styrol copolymerisierbare Monomere, z. B. ethylenisch ungesättigte Nitrile wie Acrylnitril, Ethylacrylat, Methylmethacrylat oder Vinylacetat in Betracht.

Weiterhin hat es sich als vorteilhaft erwiesen, wenn die hydrophoben Polymersegmente eine Glasübergangstemperatur oberhalb 50 °C, insbesondere oberhalb 70 °C, und besonders bevorzugt oberhalb 80 °C aufweisen. Als Glasübergangstemperatur gilt hier die mittels DSC bestimmte "mid-point"-Temperatur (vgl. ASTM-D3418-82). Eine hohe Glasübergangstemperatur ist insbesondere hinsichtlich einer gewünschten geringen Kompressibilität des Polymerisats P von Vorteil.

Weiterhin hat es sich als günstig erwiesen, wenn die teilchenförmigen Polymerzubereitungen Korngrößen unterhalb 1 mm, vorzugsweise im Bereich von 1 µm bis 700 µm, insbesondere 2 µm bis 500 µm und besonders bevorzugt 5 bis 200 µm aufweisen. Die hier angegebenen Werte sind so zu verstehen, dass 90 Gew.-% der Teilchen der Polymerzubereitung einen Durchmesser in dem angegebenen Bereich aufweisen. Die Korngrößen können in üblicher Weise, z. B. durch Lichtstreuung oder durch Sieb-Verfahren, ermittelt werden.

Die Herstellung der erfindungsgemäß zur Anwendung kommenden Polymerzubereitungen ist im Prinzip bekannt und erfolgt in Abhängigkeit von der gewünschten Korngröße durch Granulieren, Schroten und/oder Mahlen von Polymerisaten P und/oder von Compounds, die noch weitere Filterhilfsmittel enthalten oder durch Trocknung, d. h. durch Entfernen der flüchtigen Bestandteile aus einer Lösung oder Suspension der Polymerisate P, die gegebenenfalls noch weitere Filterhilfsmittel enthält. Vorzugsweise setzt man zur Trocknung wässrige Dispersionen/Suspensionen des Polymerisats P bzw. einer Mischung des Polymerisats P ein.

Bei den zu trocknenden Dispersionen/Suspensionen kann es sich sowohl um wässrige Primärdispersionen als auch um Sekundärdispersionen handeln. Primärdispersionen werden bekanntermaßen durch Polymerisation hydrophober Monomerbausteine in einem wässrigen Dispergiermedium, vorzugsweise in Gegenwart hydrophiler Polymere als oberflächenaktive Substanzen, hergestellt. Sekundärdispersionen erhält man beispielsweise durch Dispergieren der auf anderem Wege, z. B. durch Lösungs- oder Substanzpolymerisation, hergestellten Polymerisate P in dem wässrigen Dispergiermedium. Sekundärdispersionen kann man außerdem auch durch Emulgieren einer Lösung des Polymerisats P in einem organischen Lösungsmittel in einem wässrigen Emulgiermedium herstellen. Diese Lösungen werden dann nach bekanntem Verfahren in eine wässrige Dispersion oder Suspension überführt. Hierzu kann man beispielsweise die Polymerlösungen mit einer ausreichenden Menge Wasser versetzen und anschließend das organische Lösungsmittel entfernen, beispielsweise abdestillieren, vorzugsweise unter Anlegen eines Vakuums. Geeignete organische Lösungsmittel zur Herstellung der Sekundärdispersion sind solche, die das Polymerisat mit hydrophilen und hydrophoben Segmenten zu lösen vermögen und die sich destillativ entfernen lassen. Die Art des jeweiligen Lösungsmittels hängt dabei naturgemäß von der Art der hydrophilen und der hydrophoben Segmente ab, und kann anhand einfacher Routineexperimente vom Fachmann ermittelt werden.

Beispiele für geeignete organische Lösungsmittel sind C₁-C₁₀-Alkylester aliphatischer Carbonsäuren wie der Essigsäure oder der Propionsäure, z. B. Ethylacetat, n-Butylacetat, tert.-Butylacetat, aromatische Kohlenwasserstoffe, wie Toluol oder tert.-Butylbenzol, Ether, wie Tetrahydrofuran, Dioxan oder tert.-Butylmethylether, Ketone wie Aceton oder Methylethylketon, und dergleichen.

Die Gewinnung der teilchenförmigen Polymerisate erfolgt dann durch Entfernung der flüchtigen Komponenten aus den so erhaltenen wässrigen Dispersionen nach den üblichen Methoden der Pulverherstellung, beispielsweise durch Gefriertrocknung oder durch Sprühtrocknung, oder im Falle grobteiliger Suspensionen durch Filtration.

Polymerisate P mit hydrophilen Segmenten und hydrophoben Segmenten zur Herstellung der erfindungsgemäß zur Anwendung kommenden teilchenförmigen Polymerizubereitungen sind aus dem Stand der Technik bekannt oder können nach üblichen Methoden hergestellt werden.

Für die erfindungsgemäße Anwendung hat es sich als besonders vorteilhaft erwiesen, wenn man zur Herstellung des teilchenförmigen Polymerisats P solche Polymere einsetzt, die nach einem der beiden nachstehend beschriebenen Herstellungsverfahren hergestellt worden sind:
i) Polymerisation der hydrophoben Monomerbausteine in Gegenwart wenigstens eines hydrophilen Polymeren, oder
ii) Polymerisation der hydrophilen Monomerbausteine in Gegenwart wenigstens eines hydrophoben Polymeren.

Die Polymerisation nach der Methode i) wie auch die Polymerisation nach der Methode ii) kann nach den üblichen Polymerisationsverfahren, beispielsweise nach einem Polyadditions-, Polykondensations- oder einem radikalischen Polymerisationsverfahren, erfolgen, wobei letztere Vorgehensweise in der Regel bevorzugt wird.

Üblicherweise werden zur Herstellung des Polymerisats P solche Polymerisationsbedingungen gewählt, bei denen es zu einer Verknüpfung, d. h. zur Ausbildung chemischer Bindungen zwischen den Polymersegmenten, kommt. Bei Polyadditionsverfahren wird man daher bevorzugt solche Polymere als Pfropfgrundlage verwenden, die funktionelle Gruppen aufweisen, welche mit den Monomerbausteinen reagieren können. Bei radikalischen Polymerisationsverfahren wird man vorzugsweise so vorgehen, dass man als Pfropfgrundlage ein Polymer verwendet, welches pfropfaktive C-Atome aufweist und die Polymerisationsbedingungen so wählen, dass es zu einer wirksamen Pfropfung der zu polymerisierenden Monomere auf dem vorgelegten Polymer kommt. Verfahren hierzu sind aus dem Stand der Technik bekannt.

Häufig wird man ein Polymerisat P einsetzen, das erhältlich ist durch radikalische Polymerisation ethylenisch ungesättigter, hydrophober Monomere A, gegebenenfalls zusammen mit davon verschiedenen Copolymeren B, in Gegenwart eines hydrophilen Polymers. Dieses bildet dann im Polymerisat P die hydrophilen Segmente, wohingegen die hydrophoben Segmente von den polymerisierten Monomeren A gebildet werden. Bei dieser Vorgehensweise wird man die vorgenannten hydrophoben Monomere A in Gegenwart geeigneter hydrophiler Polymere, die vorzugsweise die oben genannten Charakteristika aufweisen, umsetzen.

Beispiele für hydrophile Polymere sind daher Polyvinylalkohole, Homo- und Copolymere, die zu einem überwiegenden Anteil aus Vinyllactamen wie N-Vinylpyrrolidon aufgebaut sind, Polyvinylmethylether sowie Polyalkylenoxide, wobei Letztere bevorzugt werden. Besonders bevorzugt sind die zuvor genannten Polyethylenoxid/Polypropylenoxid-Blockcopolymere sowie Polyethylenoxide mit Molekulargewichten > 10000 Dalton. Derartige Polymere sind unter radikalischen Polymerisationsbedingungen hinreichend pfropfaktive, um eine zumindest teilweise Verknüpfung der hydrophilen Polymerketten mit den sich bildenden hydrophoben Polymerketten zu gewährleisten.

Die radikalische Polymerisation der hydrophoben Monomere in Gegenwart wenigstens einen hydrophilen Polymers erfolgt dabei vorzugsweise als Lösungspolymerisation in einem organischen Lösungsmittel, welches beide Komponenten zu lösen vermag, oder als Substanz-Polymerisation.

In der Regel führt man die radikalische Polymerisation in Gegenwart der hierfür üblichen Polymerisationsinitiatoren durch, die beim Erwärmen unter Ausbildung radikalischer Polymerisationszentren verfallen. Beispiele für derartige Verbindungen sind organische Peroxide, z. B. Perester von Carbonsäuren wie tert.-Amylperpivalat, tert.-Butylperpivalat, tert.-Butylperneohexanoat, tert.-Butylperisobutyrat, tert.-Butylper-2-ethylhexanoat, tert.-Butylperiosonoanoat, tert.-Butylpermaleat, tert.-Butylperbenzoat, Percarbonate wie Di-(2-ethylhexyl)peroxodicarbonat, Dicyclohexylperoxodicarbonat, Di-(4-tert.-butylcyclohexyl)peroxodicarbonat, weiterhin Keton-Peroxide wie Acetylacetonperoxid, Methylethylketonperoxid, Hydroperoxide wie tert.-Butylhydroperoxid und Cumolhydroperoxid, weiterhin Azo-Initiatoren wie 2,2'-Azobis(amidinopropan)dihydrochlorid, 2-2'-Azobis(N,N'-dimethylen)isobutyramidindihydrochlorid, 2-(carbamoylazo)isobutyronitril, 2,2-Azobisisobutyronitril, oder 4,4'-Azobis(4-cyanovaleriansäure). Derartige Initiatoren wird man in der Regel in einer Menge von 0,01 bis 5 und vorzugsweise in einer Menge von 0,05 bis 2,0 Gew.-%, bezogen auf die Menge der zu polymerisierenden Monomere, einsetzen. Die erforderliche Polymerisationstemperatur richtet sich in bekannter Weise nach der Art der zu polymerisierenden Monomere und liegt üblicherweise im Bereich von 20 °C bis 200 °C, insbesondere im Bereich von 50 bis 180 °C. Je nach Art des verwendeten Lösungsmittels und der Art der Monomere wird man zur Erreichung der Polymerisationstemperatur in Druckgefäßen arbeiten. Häufig ist jedoch auch ein druckloses Arbeiten möglich.

Sofern die radikalische Polymerisation als Lösungspolymerisation durchgeführt wird, kommen hierfür die üblichen Lösungsmittel in Betracht, vorzugsweise die vorgenannten Lösungsmittel, wie Diester aliphatischer Carbonsäuren, z. B. Diester der Essigsäure und/oder Diester der Propionsäure, aromatische Kohlenwasserstoffe oder Ketone wie Aceton oder Methylethylketon. Die Lösungspolymerisation hat zudem den Vorteil, dass die dabei erhaltenen Polymerlösungen direkt in wässrige Dispersionen der erhaltenen Polymere überführt werden können, die ihrerseits für die Herstellung der Polymerpulver bevorzugt werden.

Die Einsatzstoffe richten sich bei den jeweiligen Polymerisationsverfahren natürlich nach der gewünschten Zusammensetzung, d. h. die Art und Menge der hydrophoben Monomerbausteine entspricht in der Art und dem Gewichtsanteil der hydrophoben Polymersegmente, und die Art und Menge der hydrophilen Polymere entspricht der Art und der Menge der hydrophilen Polymersegmente im Polymerisat P.

Die erfindungsgemäß zur Anwendung kommenden, teilchenförmigen Polymerisate P zeichnen sich durch eine gute Filtrationswirkung aus und sind im Unterschied zu den gebräuchlichen Filterhilfsmitteln leichter regenerierbar. Zudem weisen sie eine verbesserte Sedimentation in Wasser auf, so dass sie insbesondere als Filterhilfsmittel für die Anschwemmfiltration wässriger Flüssigkeiten geeignet sind.

Die erfindungsgemäß zur Anwendung kommenden Polymerzubereitungen können ausschließlich aus dem Polymerisat P bestehen. Sie können aber auch andere, konventionelle Filterhilfsmittel enthalten. Der Anteil dieser konventionellen Filterhilfsmittel wird in der Regel 80 Gew.-%, vorzugsweise 50 Gew.-%, der Gesamtmenge aus Polymerisat P und konventionellem Filterhilfsmittel nicht überschreiten.

Konventionelle Filterhilfsmittel sind ausgewählt unter den vorgenannten silikatischen Filterhilfsmitteln und den polymeren Filterhilfsmitteln. Bevorzugt werden polymere Filterhilfsmittel wie vernetztes Polyvinylpyrolidon, Polystyrole oder Polyamide. In einer bevorzugten Ausführungsform umfassen die zur Anwendung kommenden Polymerzubereitungen:
a. 10 bis 95 Gew.-%, insbesondere 15 bis 80 Gew.-%, besonders bevorzugt 25 bis 70 Gew.-% wenigstens eines Polymerisats P, und
b. 90 bis 5 Gew.-%, insbesondere 85 bis 20 Gew.-%, besonders bevorzugt 30 bis 75 Gew.-% wenigstens eines weiteren, konventionellen Filterhilfsmittels.

Bevorzugte konventionelle Filterhilfsmittel für diese Anwendungen sind gewählt unter synthetischen Filterhilfsmitteln auf Basis organischer Polymere, insbesondere auf Basis von Styrolpolymeren und/oder Polyamiden.

Unter dem Begriff "Styrolpolymer" soll die gesamte Gruppe der "Styrolhomo- und Copolymere", wie sie in A. Aechte; Handbuch der technischen Polymerchemie, VCH Weinheim 1993, beschrieben ist, verstanden werden. Diese Definition umfasst sowohl Homo-Polystyrol und Copolymere des Styrols, insbesondere mit Acrylnitril, Maleinsäureanhydrid, mit Acrylat und ähnlichen Comonomeren, sowie deren Kautschuk- oder schlagzäh-modifizierte Abwandlungen. Zu den geeigneten Polyamiden zählt insbesondere Polyamid-12.

Die vorliegende Erfindung betrifft auch ein Verfahren zur Filtration wässriger Flüssigkeiten, insbesondere ein Verfahren, das nach der Methode der Anschwemmfiltration durchgeführt wird. Auf Grund ihrer chemischen Inertheit sind die erfindungsgemäß zur Anwendung kommenden Polymerpulver, insbesondere zum Einsatz in der Lebensmittelindustrie, beispielsweise zur Filtration von Fruchtsaft- und Gärungsgetränken, geeignet. Auf Grund ihrer guten Filtrationswirkung sind die erfindungsgemäß zur Anwendung kommenden Polymerpulver besonders für die Filtration von Bier geeignet.

Die Filtrationsverfahren können in Analogie zu den eingangs beschriebenen Filtrationsverfahren des Standes der Technik unter Anwendung der oben beschriebenen Polymerpulver als Filterhilfsmittel durchgeführt werden.

Im Falle der sogenannten Anschwemmfiltration wird man in der Regel vor Filtrationsbeginn auf einer Stützfläche (Filtergebe) eine Vorschicht aus den erfindungsgemäß zur Anwendung kommenden Polymerpulvern aufbringen. Die zu filtrierende Flüssigkeit wird dann durch Anlegen einer Druckdifferenz durch die Filterschicht geführt, wobei man vorzugsweise während des Filtrationsvorganges weiteres erfindungsgemäß zur Anwendung kommendes Polymerpulver als Filterhilfsmittel der zu filtierenden Flüssigkeit zudosiert.

Die folgenden Beispiele sollen die Erfindung näher erläutern, ohne sie jedoch darauf einzuschränken.

### I. Herstellung von Polymeren mit hydrophilen und hydrophoben Segmenten (Polymere P1, P2 und P3):

In einem Reaktionsgefäß werden Styrol, ein Polyether (Triblock EO/PO/EO-Polymer) und Ethylacetat als Lösungsmittel gelöst. Man inertisiert das Reaktionsgefäß, erwärmt auf 78 °C und gibt dann tert.-Butylperpivalat als Initiator zu. Man polymerisiert unter Beibehaltung der Temperatur 2 h, und kühlt dann auf Raumtemperatur ab. Die so erhaltenen Polymerlösungen werden zur Herstellung der Polymerpulver weiter verarbeitet. Die Einsatzstoffe sind in Tabelle 1 angegeben.

**Tabelle 1**

| Polymer | Styrol [g] | Polyether¹⁾ [g] | Ethylacetat [g] |
|---|---|---|---|
| P1 | 40 | 10 | 50 |
| P2 | 45 | 5 | 50 |
| P3 | 400 | 40 | 200 |

| | | | |
|---|---|---|---|
| ¹⁾ Triblockcopolymer aus Ethylenoxid/Propylenoxid/Ethylenoxid mit einem Gewichtsanteil des Polypropylenoxids von 60 % und einem zahlenmittleren Mₙ von 4600 Dalton. | | | |

### II. Herstellung der Polymerzubereitung (Pulver FH1 bis FH4)

Die Polymerlösungen aus I werden, gegebenenfalls zusammen mit Polystyrol, in 360 g Ethylacetat gelöst. Diese Lösung wird mit 360 g Wasser versetzt. Anschließend engt man unter Anlegen von vermindertem Druck auf etwa die Hälfte des Volumen ein. Hierbei entsteht eine wässrige Suspension, die filtriert und mit Wasser gewaschen wird. Anschließend erhält man den Filterrückstand. Hierbei erhält man ein rieselfähiges Pulver, das aus kleinen Polymerkugeln mit Durchmessern im Bereich von 5 bis 500 µm besteht.

Die Einsatzstoffe dieser Umsetzung sind in Tabelle 2 beschrieben.

**Tabelle 2**

| Filtrierhilfsmittel | Polymer P Typ [g] | | Polystyrol¹ [g] |
|---|---|---|---|
| FH1 | P1 | 40 | 40 |
| FH2 | P2 | 80 | 0 |
| FH3 | P3 | 120 | 60 |
| FH4 | P3 | 60 | 120 |
| FH5 | P3 | 33 | 135 |
| FH6 | P3 | 50 | 120 |

| | | | |
|---|---|---|---|
| ¹⁾ Polystyrol Typ 168 N (BASF AG) | | | |

### III. Anwendungstechnische Prüfung

### III.1 Sedimentation in Wasser

Die Bestimmung der Sedimentation erfolgte visuell. Hierzu wurde ein Aliquot des Filterhilfsmittels in einem Standzylinder in Wasser durch Schütteln suspendiert. Wenn mehr als 90 % der Teilchen sedimentieren, wird der Versuch positiv bewertet.

**Tabelle 3:**

| Sedimentation in Wasser | |
|---|---|
| Filterhilfsmittel | Sedimentation in Wasser |
| Polystyrol¹ (V) | nein |
| Polyamid² (V) | nein |
| Kieselgur (V) | ja |
| FH1 | ja |
| FH2 | ja |
| FH3 | ja |
| FH4 | ja |
| FH5 | ja |
| FH6 | ja |
| V = Vergleich | |

| | |
|---|---|
| ¹⁾ Polystyrol 158 K, kaltgemahlen und gesiebt | |
| ²⁾ Polyamid 12, Vestosint Typ 1611 der Fa. Degussa-Hüls | |

Tabelle 3 belegt die gute Sedimentation der erfindungsgemäßen Filterhilfsmittel und damit ihre Eignung für die Ausschwemmfiltration wässriger Flüssigkeiten.

### III.2 Filtration einer Standard-Trübungslösung

Die Filtrationswirkung wird anhand der Klärung einer Standard-Trübungslösung, d. h. einer Formazin-Suspension mit definierter Trübung, bestimmt. Diese Lösungen sind dem Fachmann zur Charakterisierung von Filterhilfsmitteln für die Getränkeindustrie bekannt. Die Untersuchung wird als Anschwemmfiltration durchgeführt. Hierzu wurde die Formazin-Suspension mit dem erfindungsgemäßen Filterhilfsmittel gemäß EBC-Test bei einem Anschwemmdruck von 4,5 bar und einer Durchflussrate von 20 l h⁻¹ (jeweils Anfangswerte) filtriert. Nach 5 l, 10 l und 15 l Durchfluss wurde die Trübung nach EBC bestimmt. Das Filtrat gilt als klar, wenn der EBC-Wert weniger als 1 beträgt. Alternativ kann man den EBC-Wert auch durch Bestimmung der nephelometrischen Trübung (FNU-Wert) bestimmen, wobei 1 EBC = 4 FNU gilt. Die Ergebnisse sind in Tabelle 4 angegeben.

Während der gesamten Untersuchung blieben sowohl Anschwemmdruck als auch Filtrationsrate konstant, was die vorteilhaften Eigenschaften der erfindungsgemäßen Filterhilfsmittel belegt (hohe Standzeit).

Die Trübung wird nach dem Standardtest gemäß EBC (European Brewery Convention) bestimmt. Eine Flüssigkeit wird als klar beurteilt, wenn die Trübungswerte gemäß EBC < 1 sind.

Die folgenden Untersuchungen wurden mit den Polymerpulvern FH4 bis FH6 aus II durchgeführt.

**Tabelle 4**

| Probe: | FH4 | FH5 | FH6 |
|---|---|---|---|
| EBC-Trübung nach Durchflussvolumen von | | | |
| 5 l | 4,05 | 1,88 | 0,88 |
| 10 l | 2,99 | 0,50 | 0,35 |
| 15 l | 0,32 | 0,33 | 0,18 |

## Patentansprüche

1. Verwendung teilchenförmiger, in Wasser unlöslicher Polymerzubereitungen, umfassend wenigstens ein Polymerisat P, das im Wesentlichen aus hydrophilen Polymersegmenten und hydrophoben Polymersegmenten aufgebaut ist, als Filterhilfsmittel für die Filtration wässriger Flüssigkeiten.

2. Verwendung nach Anspruch 1, wobei im Polymerisat P das Gewichtsverhältnis von hydrophilen Polymersegmenten zu hydrophoben Polymersegmenten im Bereich von 1:1 bis 1:100 liegt.

3. Verwendung nach Anspruch 1 oder 2, wobei die hydrophilen Polymersegmente nichtionischer Natur sind.

4. Verwendung nach einem der vorhergehenden Ansprüche, wobei die hydrophilen Polymersegmente eine Polyalkylenetherstruktur haben.

5. Verwendung nach einem der vorhergehenden Ansprüche, wobei die hydrophoben Polymersegmente im Wesentlichen aus ethylenisch ungesättigten, hydrophoben Monomeren A aufgebaut ist.

6. Verwendung nach Anspruch 5, wobei die Monomere A unter vinylaromatischen Monomeren ausgewählt sind.

7. Verwendung nach einem der vorhergehenden Ansprüche, wobei das Polymerisat P erhältlich ist durch radikalische Polymerisation ethylenisch ungesättigter Monomere umfassend wenigstens 80 Gew.-% hydrophobe Monomere A und gegebenenfalls bis zu 20 Gew.-% von den Monomeren A verschiedene Comonomeren B, in Gegenwart wenigstens eines hydrophilen Polymers, welches im Polymerisat P die hydrophilen Segmente bildet.

8. Verwendung nach einem der vorhergehenden Ansprüche, wobei die Polymerteilchen des Polymerisats P eine mittlere Korngröße im Bereich von 1 bis 700 µm aufweisen.

9. Verwendung nach einem der vorhergehenden Ansprüche, wobei es sich bei der zu filtrierenden Flüssigkeit um ein Fruchtsaft- oder Gärungsgetränk handelt.

10. Verwendung nach Anspruch 9, wobei das Gärungsgetränk Bier ist.

11. Verwendung nach einem der vorhergehenden Ansprüche, wobei die Polymerzubereitung zusätzlich ein konventionelles, teilchen- oder faserförmiges Filterhilfsmittel enthält.

12. Verwendung nach einem der Anspruch 11, wobei das konventionelle teilchenförmige Filterhilfsmittel ausgewählt ist unter Polyamiden und Polystyrol.

13. Verfahren zur Filtration einer wässrigen Flüssigkeit unter Verwendung von Filterhilfsmitteln, **dadurch gekennzeichnet, dass** man als Filterhilfsmittel eine Polymerzubereitung wie in einem der Ansprüche 1 bis 12 definiert, verwendet.

14. Verfahren nach Anspruch 13, **dadurch gekennzeichnet, dass** das die Filtration als Anschwemmfiltration durchgeführt wird.

15. Filterhilfsmittel in Form einer teilchenförmigen, wasserunlöslichen Polymerzubereitung, enthaltend:
a. 10 bis 95 Gew.-% wenigstens eines Polymerisats P, das aus hydrophilen Polymersegmenten aufgebaut ist und
b. 5 bis 90 Gew.-% wenigstens eines konventionellen Filterhilfsmittels.
